# DEMANDE DE BREVET EUROPEEN

(11) **EP 4 203 143 A1**
(43) Date de publication de la demande: **28.06.2023**
(21) Numéro de dépôt: 22213137.7
(22) Date de dépôt: 13.12.2022
(51) Int. Cl.: H01M 10/613, H01M 10/625, H01M 10/647, H01M 10/6556, H01M 10/6568, H01M 50/211, H01M 50/249, H01M 50/264

(54) **PROCÉDÉ ET SYSTÈME DE GESTION D'UN DISPOSITIF DE BATTERIE D'UN VÉHICULE ÉLECTRIQUE OU HYBRIDE CONTENANT UNE MESURE DE TENSION DES CELLULES RELIÉES À UNE BARRE D'INTERCONNEXION**

(30) Priorité: 23.12.2021 FR 2114316
(71) Demandeur: Renault s.a.s, 92100 Boulogne Billancourt (FR)
(72) Inventeur: BESNARD, Nicolas, 78084 GUYANCOURT CEDEX (FR); LERAY, David, 78084 GUYANCOURT CEDEX (FR)

(57) **Abrégé**

Module de batterie (1) comprenant au moins une cellule électrochimique (2) souple prismatique et au moins une paire (3) de blocs d'empilement (4), l'au moins une cellule (2) comprenant au moins une portion extrêmale (24) portant au moins un connecteur (22) électrique, les blocs d'empilement (4) comprenant chacun une première partie et une deuxième partie disposées à distance non nulle de l'au moins un connecteur (22), les premières parties desdits blocs s'étendant chacune au contact d'un côté opposé de l'au moins une portion extrêmale (24) et les deuxièmes parties s'étendent en regard l'une de l'autre et étant fluidiquement reliées l'une à l'autre.

## Description

La présente invention concerne un module de batterie électrique comprenant au moins une cellule électrochimique de stockage d'énergie électrique, particulièrement une cellule électrochimique souple prismatique. L'invention concerne également un bloc d'empilement pour un tel module de batterie et un véhicule comprenant ledit bloc et/ou ledit module. L'invention concerne enfin un procédé d'assemblage d'un module de batterie.

Dans les véhicules électriques ou hybrides, les moyens de motorisation électriques actuels font appel à des dispositifs de batteries électriques, ou selon l'anglicisme "pack batterie" ou "battery pack", de plus en plus performants afin de rivaliser avec les moteurs thermiques. L'augmentation des performances motrices électriques inclut notamment l'amélioration de l'autonomie du véhicule, par exemple par augmentation du nombre de cellules.

Classiquement, ces dispositifs de stockage d'énergie électrique comprennent une pluralité de cellules, notamment de type Lithium, ou Li-ion. Plus particulièrement, dans le cadre de la présente invention, les cellules considérées sont des cellules souples dites prismatiques comprenant un empilement d'électrodes glissé dans une enveloppe qualifiée de sachet ou de poche, ou encore en anglais de « pouch », qui est thermoscellée ou collée de sorte à ne laisser ressortir que les terminaux électriques.

Les dimensions et le nombre de telles cellules, ainsi que des modules qu'elles forment par assemblage, peuvent être amenés à varier grandement d'un dispositif de batterie à un autre, résultant en la nécessité d'une grande diversité de pièces spécifiques à chaque modèle de dispositif considéré, notamment afin de permettre la fixation, ou l'assemblage, des cellules dans les modules. Il en résulte une grande complexité d'une part au niveau du développement des différentes pièces propres à un dispositif et, d'autre part, au niveau de l'assemblage desdites pièces.

Par ailleurs l'ajout de nombreuses pièces se fait au détriment de la densité d'énergie de la batterie et s'accompagne d'une augmentation conséquente de l'encombrement et de la masse du dispositif.

Également, l'augmentation des performances motrices électriques inclut la recherche de moyens de recharge rapide. On connaît des bornes de recharge rapide, ou « fast charge », mettant en oeuvre des puissances électriques importantes, notamment supérieures à 50 kW, ou de recharge ultra rapide, en anglais « ultra fast charge », impliquant des puissances électriques allant jusqu'à 350 kW. De telles puissances s'accompagnent néanmoins d'une forte dissipation thermique dans le dispositif de batterie, qui, si elle n'est pas évacuée, peut y provoquer des dommages irréversibles tels qu'une réduction de sa durée de vie ou une limitation de sa vitesse de charge. De tels dommages sont notamment observés au niveau des cellules et des matériaux transportant le courant tels que les terminaux électriques, notamment les connecteurs électriques, et les soudures.

Le refroidissement des cellules électrochimiques peut être mis en œuvre selon différentes technologies. Par exemple, le brevet JP6213122 décrit un assemblage de cellules électrochimiques à partir de « blocs de jonction » identiques formant des entretoises disposées de manière répétitive entre les cellules, ces entretoises assurant à la fois une fonction de tenue mécanique et une fonction de refroidissement par contact direct contre les faces latérales des cellules. D'une part, l'efficacité de cette solution est limitée car la conductivité thermique dans le plan perpendiculaire aux cellules est relativement faible. D'autre part, dans cette solution l'épaisseur des entretoises va à l'encontre d'une architecture optimisée et génère un encombrement conséquent ainsi qu'une perte en densité d'énergie. Enfin, une telle solution nécessite beaucoup de pièces métalliques assemblées, ce qui implique des pertes en densité d'énergie.

L'invention s'inscrit dans ce contexte et a pour but de fournir un module de batterie comprenant au moins une cellule électrochimique souple prismatique permettant une simplification du module et de son assemblage, ainsi qu'une réduction de sa masse, de son encombrement et de son coût, tout en permettant un conditionnement thermique adapté de l'au moins une cellule. De tels buts s'étendent à un dispositif de batterie comprenant au moins un module selon l'invention. L'invention vise également à proposer un procédé d'assemblage plus simple de réalisation et moins coûteux d'un tel module.

A cette fin, l'invention propose un module de batterie comprenant au moins une cellule électrochimique souple prismatique et au moins une paire de blocs d'empilement, l'au moins une cellule comprenant une portion principale, à l'intérieur de laquelle s'étend une pluralité d'électrodes, et au moins une portion extrêmale, notamment une terrasse, prolongeant la portion principale et portant au moins un connecteur électrique relié aux électrodes. En outre :
- les blocs d'empilement de l'au moins une paire comprennent chacun une première partie et une deuxième partie disposées à distance non nulle de l'au moins un connecteur et de la portion principale de la cellule, les premières parties desdits blocs s'étendant chacune au contact de l'un des deux côtés opposés de l'au moins une portion extrêmale de la cellule, de sorte que ladite portion extrêmale est interposée entre les blocs d'empilement de la paire ;
- les deuxièmes parties des blocs d'empilement de ladite paire s'étendent en saillie de la première partie, en regard l'une de l'autre, et comprennent chacune au moins un passage configuré pour permettre la circulation d'un fluide, notamment d'un fluide de refroidissement, de sorte qu'au moins les blocs d'empilement de la paire sont fluidiquement reliés l'un à l'autre.

Notamment, la première partie des blocs d'empilement peut être au moins partiellement recouverte d'une pâte thermique. Particulièrement la première partie des blocs d'empilement peut présenter une surface de contact avec l'au moins une portion extrêmale plane ou sensiblement plane.

La première partie des blocs d'empilement peut présenter une première épaisseur, le long d'une première direction orthogonale à l'au moins une portion extrêmale, strictement inférieure à une deuxième épaisseur de la deuxième partie le long de cette même direction, notamment de sorte que la différence entre la première épaisseur et la deuxième épaisseur est supérieure ou égale à la moitié d'une épaisseur de la portion extrêmale de la cellule électrochimique.

Selon un exemple de réalisation non limitatif, les blocs d'empilement de l'au moins une paire peuvent présenter une forme en « C », ou sensiblement en «C », la deuxième partie desdits blocs d'empilement comprenant deux branches, formant les branches du « C », lesquelles sont disposées de sorte que la première partie est interposée entre lesdites deuxièmes parties et la portion principale de la cellule électrochimique considérée le long d'au moins une direction. Alternativement, les blocs d'empilement peuvent présenter une forme en « L », la deuxième partie desdits blocs d'empilement comprenant une branche.

Le module de batterie peut comprendre au moins un organe de liaison des blocs d'empilement de l'au moins une paire configuré pour maintenir lesdits blocs solidaires l'un de l'autre, la deuxième partie étant configurée pour accueillir l'au moins un organe de liaison.

Le module de batterie peut, en outre, comprendre au moins un moyen d'étanchéité disposé au niveau du passage de l'un et/ou de l'autre des blocs d'empilement de la paire.

Notamment, le module de batterie peut comprendre une pluralité de cellules électrochimiques empilées le long d'une direction définie par un axe d'empilement et une pluralité de paires de blocs d'empilement chacune configurée pour coopérer avec au moins l'une desdites cellules, tout ou partie des blocs d'empilement de la pluralité de paires étant fluidiquement reliés entre eux, au moins deux cellules électrochimiques adjacentes de la pluralité de cellules coopérant avec deux paires de blocs d'empilement adjacentes dans lesquelles l'un des blocs d'empilement est commun auxdites deux paires de sorte que ledit bloc d'empilement commun est au contact d'un côté d'une portion extrêmale propre à chacune des deux cellules électrochimiques adjacentes le long de l'axe d'empilement.

Selon un mode de réalisation, le module de batterie peut comprendre une pluralité de connecteurs électriques et une pluralité de portions extrêmales, portant chacune l'un desdits connecteurs, la portion principale étant interposée, le long d'une direction d'extension de la cellule, entre un premier connecteur électrique et une première portion extrêmale d'une part et un deuxième connecteur et une deuxième portion extrêmale d'autre part, le module comprenant, en outre, une pluralité de paires de blocs d'empilement, au moins une paire de blocs d'empilement d'un premier sous-ensemble de blocs d'empilement coopérant avec la première portion extrêmale et au moins une paire de blocs d'empilement d'un deuxième sous-ensemble de blocs d'empilement coopérant avec la deuxième portion extrêmale.

Le module de batterie peut comprendre un boîtier configuré pour loger l'au moins une paire de blocs d'empilement et l'au moins une cellule électrochimique et/ou le module de batterie peut comprendre un ou plusieurs organe(s) de compression d'au moins les blocs d'empilement de l'au moins une paire le long d'au moins une direction.

L'invention porte également sur un bloc d'empilement pour un module de batterie tel qu'exposé plus haut, comprenant une première partie configurée pour s'étendre au contact d'une portion extrêmale d'une cellule électrochimique, ladite portion extrêmale portant un connecteur et étant dépourvue d'électrodes, et une deuxième partie comprenant au moins un passage configuré pour permettre la circulation d'un fluide, notamment d'un fluide de refroidissement, la première partie et/ou la deuxième partie des blocs d'empilement de ladite paire délimitant au moins une zone de réception configurée pour recevoir au moins un connecteur de la cellule électrochimique de sorte que celui-ci s'étende à distance non nulle de la première partie et de la deuxième partie.

L'invention concerne encore un véhicule automobile à motorisation électrique ou hybride comprenant un module de batterie et/ou au moins un bloc d'empilement selon l'invention.

L'invention porte enfin sur un procédé d'assemblage d'un module de batterie selon l'invention comprenant :
- une étape de positionnement de l'un des bloc d'empilement de l'au moins une paire de blocs d'empilement de chaque côté de l'au moins une portion extrêmale de la cellule électrochimique considérée de sorte qu'ils s'étendent chacun au contact d'un côté de celle-ci, la première partie desdits blocs d'empilement s'étendant à distance non nulle de la portion principale de l'au moins une cellule électrochimique, et les deuxièmes parties propre à chacun desdits blocs d'empilement s'étendant en regard l'une de l'autre le long d'au moins une direction ;
- une étape d'alignement desdits blocs d'empilement de sorte que leurs passages sont fluidiquement reliés ;
- une étape de solidarisation des blocs d'empilement de l'au moins une paire entre eux.

D'autres détails, caractéristiques et avantages ressortiront plus clairement à la lecture de la description détaillée donnée ci-après, à titre indicatif et non limitatif, en relation avec les différents exemples de réalisation illustrés sur les figures suivantes :
La figure 1 est une représentation schématique d'un mode de réalisation d'un module de batterie selon l'invention.
La figure 2 est une représentation schématique éclatée du module de batterie.
La figure 3 est une représentation schématique éclatée d'un ensemble formé par une cellule électrochimique et une paire de blocs d'empilement du module de batterie.
La figure 4 est une représentation schématique d'un exemple de réalisation d'un bloc d'empilement.
La figure 5 est une représentation schématique éclatée du bloc d'empilement.
La figure 6 est une représentation schématique d'un exemple de réalisation d'un bloc d'empilement comprenant un raccordement électrique.
La figure 7 est une représentation schématique éclatée d'une partie d'un module de batterie selon un premier mode de réalisation.
La figure 8 est une représentation schématique du module de batterie illustré à la figure 7, assemblé.
La figure 9 est une représentation schématique du module de batterie en coupe, réalisée au niveau des blocs d'empilement.
La figure 10 est une représentation schématique du module de batterie en coupe, réalisée au niveau des blocs d'empilement.
La figure 11 est une représentation schématique éclatée du module de batterie et de moyens de liaison.
La figure 12 est une représentation schématique de raccordements électriques et barres d'interconnexion équipés dans le module de batterie.
La figure 13 est une représentation schématique d'un exemple de circulation d'un fluide dans le module de batterie.

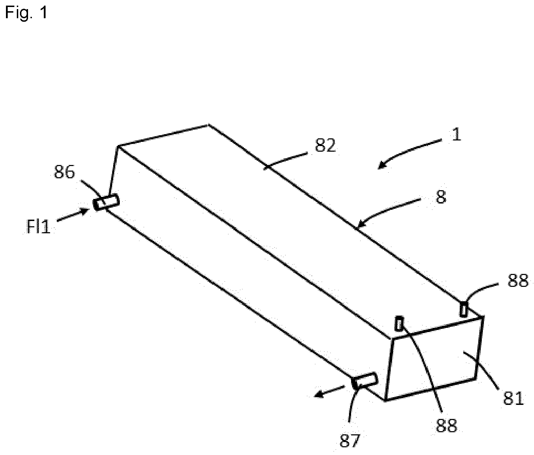

Les figures 1 à 3 représentent un exemple de réalisation d'un module de batterie 1 électrique, que l'on pourra également dénommer « batterie » ou « batterie électrique ». Un tel module de batterie 1 peut être destiné, à titre d'exemple non limitatif, à un véhicule automobile, notamment un véhicule à motorisation hybride ou électrique. Par exemple, un dispositif de batterie, ou dispositif de stockage d'énergie électrique, peut comprendre au moins un tel module de batterie 1.

De manière générale, le module comprend au moins une cellule électrochimique 2 de stockage d'énergie électrique souple prismatique et au moins une paire 3 de blocs d'empilement 4 amovibles, rapportés par rapport à ladite cellule.

Selon différents exemples de réalisation, décrits ci-après, les blocs d'empilement 4 de la paire 3 peuvent être distincts et séparés l'un de l'autre ou, de manière alternative, peuvent former un ensemble monobloc. Dans la description ci-après, le module de batterie 1 décrit comprend au moins une cellule électrochimique 4. Il est entendu que le nombre et les dimensions desdites cellules, ainsi que de tout composant du module de batterie 1 illustré ne sont en rien limitatifs.

Les cellules électrochimiques 2 sont des cellules souples prismatiques, aussi connues sous le nom de cellules de type « pouch », « en sachet » ou « en poche ». Classiquement, on entend par « prismatique » que la cellule électrochimique 2 peut présenter une forme parallélépipédique ou sensiblement parallélépipédique, notamment parallélépipédique rectangle ou carré, voire cubique. Chaque cellule est apte à stocker de l'énergie sous forme chimique et à la restituer sous forme d'un courant électrique. Les cellules électrochimiques 2 peuvent, par exemple, être du type « lithium-ion », aussi appelé « Li-ion ».

Classiquement, une cellule électrochimique 2 de type pouch comprend un empilement, non représenté, d'une pluralité d'électrodes, par exemple au moins une anode et une cathode, notamment séparées par un séparateur isolant électrique, disposé dans un feuillard 21 souple, c'est-à-dire un feuillard 21 déformable arrangé de manière à former une enveloppe en sachet ou en poche logeant les électrodes. Notamment, l'empilement d'électrodes peut être imbibé d'un électrolyte. Également, la cellule électrochimique 2 comprend au moins un terminal électrique, comprenant un connecteur 22, relié auxdites électrodes.

La cellule comprend une portion principale 23, à l'intérieur de laquelle s'étend la pluralité d'électrodes, et au moins une portion extrêmale 24, aussi qualifiée de « terrasse », prolongeant la portion principale 23 et portant l'au moins un connecteur 22. Le connecteur 22 électrique, métallique, s'étend en saillie de la portion extrêmale 24 le long d'au moins une direction. La portion extrêmale 24 est une portion de la cellule particulièrement dépourvue de l'empilement d'électrodes au niveau de laquelle deux zones distinctes du feuillard 21 sont, par exemple, reliées entre elles par thermosoudage et/ou collage afin de former la poche close, notamment hermétiquement close. Particulièrement, de manière connue, c'est au niveau d'une telle zone de la cellule que se trouvent classiquement la soudure des collecteurs de courant des électrodes avec la tab, à traiter thermiquement. Notamment, d'une part des collecteurs de cathode sont soudés avec une tab positive et, d'autre part des collecteurs d'anode sont soudés avec une tab négative. Classiquement, une telle portion extrêmale 24 présente une épaisseur inférieure à une épaisseur de la portion principale 23, tel que davantage détaillé ci-après. Notamment, une telle portion extrêmale 24 est plane ou sensiblement plane.

La cellule électrochimique 2 peut comprendre une unique portion extrêmale 24, portant par exemple plusieurs terminaux électriques comportant chacun un connecteur 22. De manière alternative, la cellule peut comprendre une pluralité de portions extrêmales 24, chacune portant au moins un connecteur 22.

Dans l'ensemble de la description ci-après, on définira l'orientation du module de batterie 1 en fonction d'un premier axe X, d'un deuxième axe Y, orthogonal au premier axe X, et d'un troisième axe Z, orthogonal au premier axe X et au deuxième axe Y. Les axes X, Y et Z sont notamment représentés par un trièdre XYZ dans les figures le nécessitant. Également, dans l'ensemble des figures, les dimensions et espacements séparant les différents composants peuvent être exagérés à des fins de clarté. Il est également entendu que, dans la description ci-après, les termes « primaire », « secondaire », « premier », « deuxième » ont vocation à distinguer les différents composants de l'invention et non à établir une hiérarchie parmi ceux-ci.

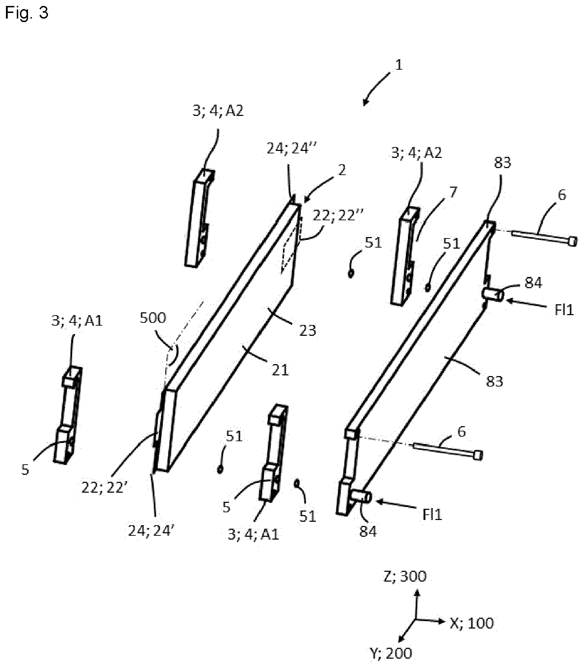

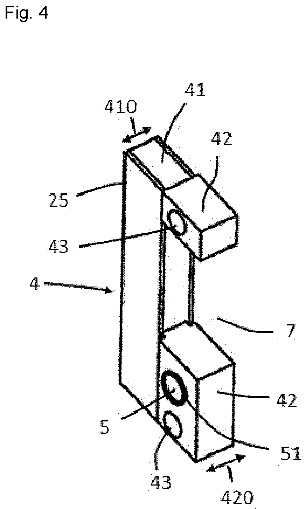

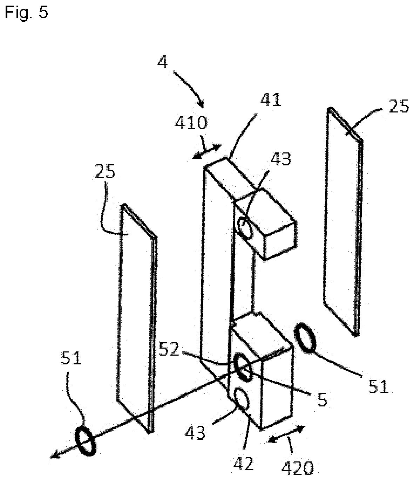

Tel qu'illustré aux figures 3 à 6, les blocs d'empilement 4 de la paire 3 comprennent chacun une première partie 41 et une deuxième partie 42, reliées l'une à l'autre. Notamment la première partie 41 et la deuxième partie 42 forment un ensemble monobloc, c'est-à-dire qu'elles ne peuvent être dissociées l'une de l'autre sans résulter en la dégradation, voire la destruction, du bloc. A titre d'exemple non limitatif, les blocs d'empilement 4 peuvent être réalisés en acier et/ou en aluminium.

La première partie 41 des blocs d'empilement 4 de la paire 3 s'étend au contact de l'au moins une portion extrêmale 24 de l'au moins une cellule. Tout ou partie de la première partie 41 desdits blocs s'étend au contact de la portion extrêmale 24. Tel que d'avantage exposé ci-après, un tel contact vise à permettre un échange thermique optimal entre les blocs d'empilement 4 de la paire 3 et l'au moins une cellule électrochimique 2 avec laquelle ils coopèrent. En effet, les modules de batterie sont classiquement soumis à d'importantes puissances, lesquelles s'accompagnent d'une forte dissipation thermique au sein des cellules électrochimiques 2, qui, si elle n'est pas évacuée, est susceptible d'engendrer des dommages irréversibles. Ces dissipations thermiques sont particulièrement présentes au niveau de la ou des portion(s) extrêmale(s) de la cellule électrochimique 2 portant le ou les connecteur(s) 22. Ces portions extrêmales 24 présentent également une bonne conductivité thermique.

Particulièrement, les premières parties 41 des blocs d'empilement 4 de la paire 3 s'étendent chacune au contact d'un côté opposé de l'au moins une portion extrêmale 24 de sorte que celle-ci est interposée entre les blocs d'empilement 4 de la paire 3. Particulièrement, l'au moins une portion extrêmale 24 est interposée entre les blocs d'empilement 4 de la paire 3 le long d'une première direction 100 orthogonale à l'au moins une portion extrêmale 24. Notamment la première direction 100 est parallèle au premier axe X du trièdre. Autrement dit, le module de batterie 1 est configuré de sorte que les blocs d'empilement 4 de la paire 3 considérée s'étendent, l'un relativement à l'autre, de part et d'autre de l'au moins une portion extrêmale 24 de la cellule. Les blocs d'empilement 4 s'étendent ainsi en prise de cette dernière, notamment de sorte à la comprimer.

Selon encore une autre formulation, l'un des blocs d'empilement 4 de la paire 3 de blocs d'empilement 4 considérée s'étend de chaque côté d'un plan de contact 500 dans lequel s'inscrit la portion extrêmale 24. A noter qu'un tel plan de contact 500 peut être confondu avec un plan d'une première surface ou d'une deuxième surface, opposée à la première surface, de la portion principale 23 de la cellule électrochimique 2. Dans une telle cellule, la portion extrêmale 24 s'étend dans la continuité de la première surface ou de la deuxième surface. Selon une alternative non représentée, le plan de contact 500 peut être interposé entre les plans propres à la première surface et à la deuxième surface.

De manière optionnelle mais préférentielle, la première partie 41 des blocs d'empilement 4 présente une surface de contact avec l'au moins une portion extrêmale 24 plane et/ou est au moins en partie recouverte d'une pâte thermique 25 de sorte à optimiser l'échange thermique mis en oeuvre entre la cellule électrochimique 2 considérée et les blocs d'empilement 4 de la paire 3.

Les deuxièmes parties 42 des blocs d'empilement 4 de ladite paire 3 s'étendent en saillie de la première partie 41, directement en regard l'une de l'autre, c'est-à-dire que la portion extrêmale 24 de la cellule électrochimique 2 n'est pas interposée entre lesdites parties le long de la première direction 100. Notamment, on entend par « en saillie » que, pour le bloc d'empilement considéré, la deuxième partie 42 est disposée de sorte que la première partie 41 est interposée entre la deuxième partie 42 et la portion principale 23 de la cellule électrochimique 2 le long d'une deuxième direction 200, orthogonale à la première direction 100. Par exemple la deuxième direction 200 est parallèle au deuxième axe Y. Les deuxièmes parties 42 s'étendent d'un côté opposé à la partie principale de la cellule électrochimique 2, relativement à la première partie 41 du bloc d'empilement 4 considéré, le long d'au moins une direction. De manière optionnelle mais préférentielle, les blocs d'empilement 4 de la paire 3 peuvent être conformés, dimensionnés et/ou disposés, de sorte que leurs deuxièmes parties 42 s'étendent au contact l'une de l'autre, notamment afin de réduire l'encombrement généré.

La première partie 41 présente une première épaisseur 410, le long de la première direction 100, strictement inférieure à une deuxième épaisseur 420 de la deuxième partie 42 du bloc d'empilement le long de cette même direction. L'épaisseur est mesurée entre une première face et une deuxième face, opposée à la première face le long de la première direction 100, du bloc d'empilement considéré. Particulièrement, au moins l'un des blocs d'empilement 4 d'une paire 3 considérée présente une telle variation d'épaisseur de sa première partie 41 relativement à sa deuxième partie 42. Selon un exemple de réalisation particulier, les deux blocs d'empilement 4 de la paire 3 présentent une telle variation d'épaisseur. La première partie 41 définit ainsi, relativement à la deuxième partie 42, un renfoncement apte à recevoir tout ou partie de l'au moins une portion extrêmale 24 de la cellule. Optionnellement, tel que mentionné précédemment, un tel renfoncement peut présenter une surface plane et/ou comprendre une pâte thermique 25. Selon un exemple de réalisation préféré, ledit bloc d'empilement 4 est dimensionné de sorte que la différence entre la première épaisseur 410 et la deuxième épaisseur 420 est supérieure ou égale à la moitié d'une épaisseur de la portion extrêmale 24 de la cellule électrochimique 2, mesurée le long de la première direction 100. Selon un exemple de réalisation particulier, davantage détaillé ci-après, le bloc d'empilement 4 peut comprendre deux renfoncements, un au niveau de chacune de la première face et de la deuxième face, de sorte à coopérer avec une pluralité de cellules électrochimiques 2.

La deuxième partie 42 des blocs d'empilement 4 de la paire 3 comprend, en outre, au moins un passage 5 configuré pour permettre la circulation d'un fluide FI1, notamment d'un fluide de refroidissement, de sorte qu'au moins les blocs d'empilement 4 de la paire 3 sont fluidiquement reliés l'un à l'autre. Notamment, un tel passage 5 peut être traversant, de sorte qu'il s'étend au travers de la deuxième épaisseur 420 du bloc d'empilement considéré le long de la première direction 100. Autrement dit, un tel passage 5 s'étend de la première face à la deuxième face du bloc d'empilement considéré. Un tel passage 5 participe à définir, au sein du module de batterie 1, au moins une partie d'un circuit de fluide FI1 de fermé, c'est-à-dire un circuit dont le fluide FI1 demeure à distance des cellules électrochimiques 2. Selon un exemple non limitatif, le fluide FI1 peut être un liquide tel que de l'eau glycolée. Alternativement, le fluide FI1 peut être un fluide diélectrique tel qu'une huile minérale ou un fluide fluorocarboné.

Les blocs d'empilement 4 permettent ainsi avantageusement d'assurer simultanément les fonctions de maintien et de traitement thermique, notamment de refroidissement, de la cellule électrochimique 2. Le fluide FI1 circule au niveau de la deuxième partie 42, à distance de la cellule électrochimique 2, les blocs d'empilement 4 mettent en oeuvre un échange thermique avec la cellule électrochimique 2, particulièrement avec la portion extrêmale 24, ou terrasse de celle-ci, qui présente classiquement la dissipation thermique la plus importante. Un tel échange thermique est favorisé par la surface de contact entre la première partie 41 des blocs de la paire 3 et la portion extrêmale 24 de la cellule et peut être optimisé par la présence de la pâte thermique 25. En outre, la pâte thermique 25, de par son élasticité, peut alors participer à l'optimisation de la compression de l'au moins une portion extrêmale 24 de la cellule entre les blocs d'empilement 4.

De manière optionnelle mais préférentielle, le module de batterie 1 peut comprendre au moins un moyen d'étanchéité 51 disposé au niveau du passage 5 de l'un et/ou de l'autre des blocs d'empilement 4 de la paire 3. Selon un exemple de réalisation, le moyen d'étanchéité 51 comprend un ou plusieurs joint(s) d'étanchéité, par exemple un ou plusieurs joint(s) torique(s). Dans l'exemple de réalisation, deux joints d'étanchéité sont disposés à l'interface entre les blocs d'empilement 4 de la paire 3, chaque joint d'étanchéité étant disposé au niveau d'une gorge 52 entourant le passage 5. Lesdites gorges 52 et/ou lesdits joints peuvent notamment être dimensionné(e)s de manière à ne pas entraver le contact entre les deuxièmes parties 42 de bloc d'empilement adjacents, le long de la première direction 100, d'une même paire 3. Selon une alternative non représentée, le moyen d'étanchéité 51 comprend un tube étanche ou un tronçon d'un tube configuré pour permettre la circulation d'un fluide FI1. Ledit tube ou tronçon s'étend au moins au travers des passages 5 des blocs d'empilement 4 de la paire 3.

Avantageusement, le module de batterie 1 peut comprendre au moins un organe de liaison 6 configuré pour maintenir au moins les blocs d'empilement 4 de l'au moins une paire 3 solidaires l'un de l'autre, par exemple le long d'au moins une direction, notamment au moins le long de la première direction 100. L'organe de liaison 6 permet notamment de maintenir l'au moins une portion extrêmale 24 de la cellule électrochimique 2 comprimée entre les blocs de la paire 3. La deuxième partie 42 des blocs d'empilement 4 de l'au moins une paire 3 peut comprendre au moins un orifice 43 configuré pour recevoir, ou accueillir, un tel organe de liaison 6. Par exemple, un tel orifice 43 peut être traversant et s'étendre au travers de la deuxième épaisseur 420 de la deuxième partie 42 du bloc considéré. Notamment, un tel orifice peut être lisse ou au moins en partie taraudé. Optionnellement, le module de batterie 1 peut comprendre une pluralité d'orifice 43 et d'organe de liaison 6. A titre d'exemple non limitatif, l'organe de liaison 6 peut être un tirant.

La première partie 41 et la deuxième partie 42 des blocs d'empilement 4 sont disposées et configurées de sorte à s'étendre à distance non nulle de la portion principale 23 de l'au moins une cellule électrochimique 2 afin de limiter l'encombrement résultant desdits blocs d'empilement 4, notamment le long de la première direction 100. En effet, la première partie 41 s'étendant au niveau de la portion extrêmale 24 de la cellule électrochimique 2 occupe un espace classiquement inutilisé au sein du module de batterie 1, compris entre les terrasses des cellules. De la sorte la portion principale 23 de l'au moins une cellule 2 est apte à s'étendre au contact de la portion principale d'une cellule 2 adjacente

La première partie 41 et la deuxième partie 42 des blocs d'empilement 4 sont également disposés et configurés de sorte à s'étendre à distance non nulle de l'au moins un connecteur 22 de sorte à prévenir un court-circuit. Avantageusement, la première partie 41 et/ou la deuxième partie 42 des blocs d'empilement 4 de la paire 3 définissent ensemble au moins une zone de réception 7 configurée pour recevoir l'au moins un connecteur 22 de sorte qu'il s'étend à distance non nulle de la première partie 41 et de la deuxième partie 42. Une telle zone de réception 7 est avantageusement dimensionnée au moins de manière à recevoir un, ou plusieurs comme exposé ci-après, connecteur(s) 22 porté(s) par l'au moins une portion extrêmale 24 coopérant avec la paire 3 de blocs d'empilement 4. Particulièrement, une telle zone de réception 7 peut également être dimensionnée de sorte à limiter l'encombrement généré, le long d'au moins une direction, par exemple le long de la première direction 100. La deuxième partie 42 est notamment dimensionnée de sorte à limiter l'encombrement généré, le long de la deuxième direction 200, relativement à l'au moins un connecteur 22 électrique.

Optionnellement mais préférentiellement, les blocs d'empilement 4 de la paire 3 présentent une hauteur, mesurée le long d'une troisième direction 300 orthogonale à la première direction 100 et à la deuxième direction 200, inférieure ou égale, ou sensiblement égale, à une hauteur de la portion principale 23 de la cellule électrochimique 2 coopérant avec ladite paire 3 de blocs d'empilement 4, mesurée le long de cette même troisième direction 300. En ce sens également, une hauteur de la zone de réception 7 est adaptée de sorte à recevoir l'au moins un connecteur 22 sans être au contact de celui-ci et en limitant l'encombrement généré le long de la troisième direction 300.

La paire 3 de blocs d'empilement 4 peut ainsi avantageusement être configurée de manière à limiter l'encombrement généré le long d'une, deux ou trois direction(s) selon sa forme et/ou ses dimensions.

De manière optionnelle, les blocs d'empilement 4 de l'au moins une paire 3 considérée peuvent présenter une forme et/ou des dimensions similaires ou sensiblement similaires, de sorte qu'ils s'étendent dans la continuité l'un de l'autre le long de la première direction 100.

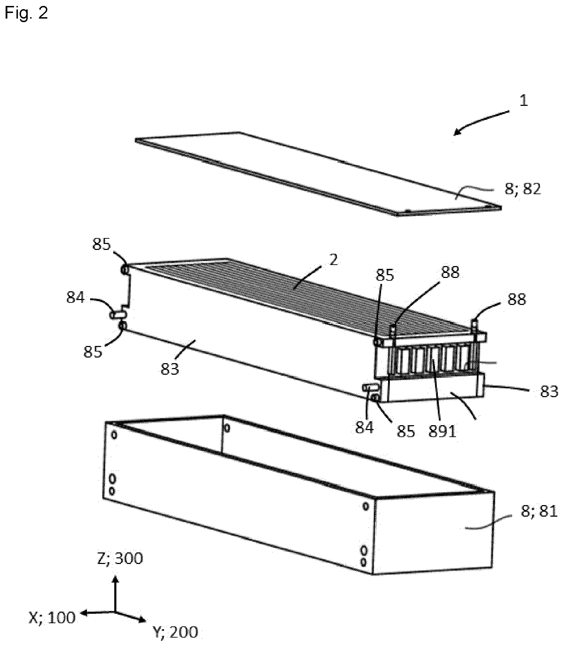

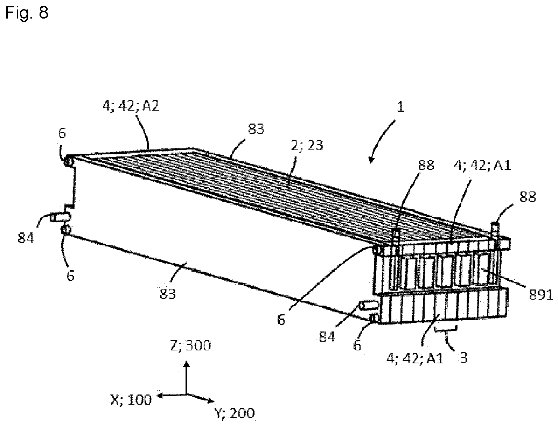

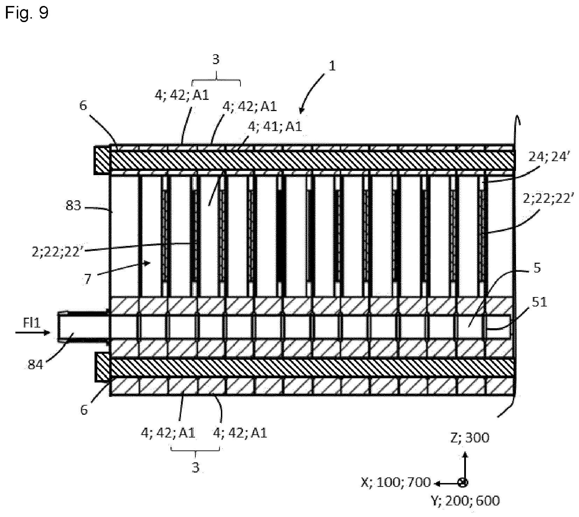

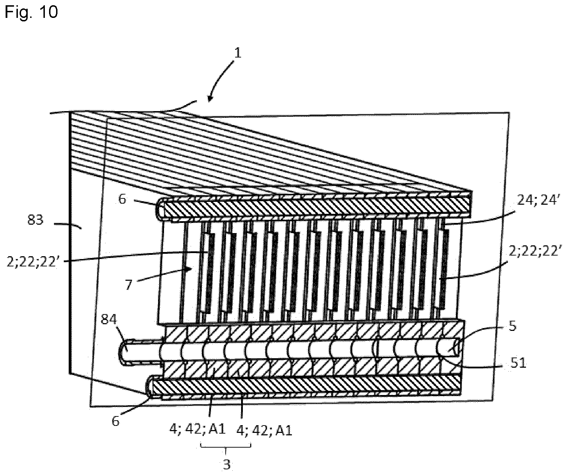

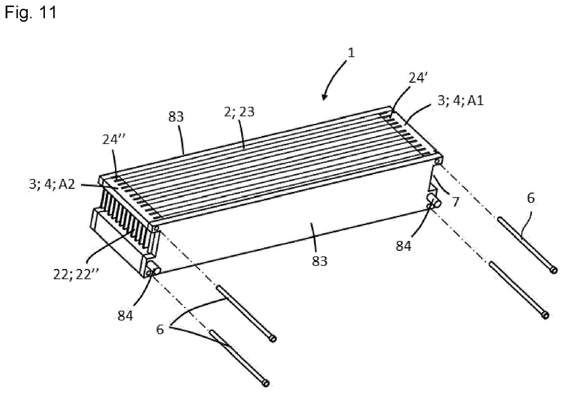

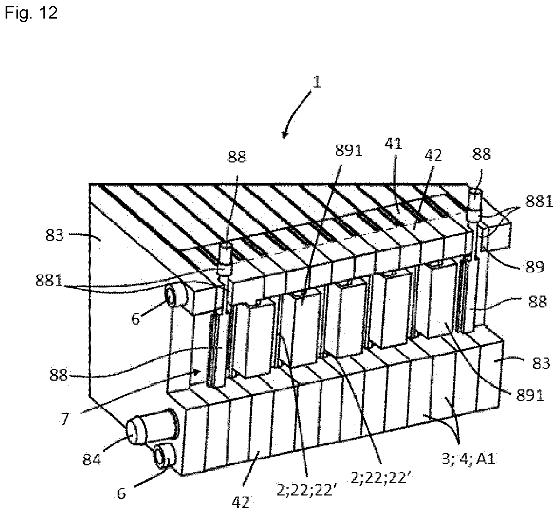

Selon un exemple particulier de réalisation, la deuxième partie 42 des blocs d'empilement 4 de l'au moins une paire 3 comprend au moins une branche s'étendant transversalement à la première partie 41 du bloc d'empilement considéré, notamment orthogonalement. Par exemple, les blocs d'empilement 4 de la paire 3 peuvent présenter une forme en « L » ou en « C », ou sensiblement en « L » ou en «C ». On entend par une forme en « L », que la deuxième partie 42 desdits blocs d'empilement 4 comprend une branche. Par exemple, une telle branche peut présenter un positionnement inférieur ou supérieur le long de la troisième direction 300, c'est-à-dire ici le long du troisième axe Z. On entend par une forme en « C », tel qu'illustré dans les figures 2 à 13, que la deuxième partie 42 comprend deux branches, formant les branches du « C », qui s'étendent transversalement à la première partie 41 du bloc d'empilement 4 considéré, par exemple orthogonalement. Particulièrement, lesdites branches peuvent être parallèles entre elles.

La description ci-après est faite en référence à un bloc d'empilement 4 présentant une forme en « C » mais s'applique *mutatis mutandis* à un bloc d'empilement présentant une forme en « L ». Par exemple, lesdites branches s'étendent le long de la deuxième direction 200, orthogonalement à la première partie 41. Notamment, la ou les branche(s) présente(nt) un positionnement extrémal, le long de la troisième direction 300, relativement à la première partie 41. En l'espèce, une première branche présente un positionnement extrêmal supérieur de sorte à s'inscrire dans la continuité de la première partie 41 et former, avec cette dernière, une surface supérieure du bloc d'empilement 4 tandis qu'une deuxième branche présente un positionnement extrêmal inférieur de sorte à s'inscrire dans la continuité de la première partie 41 et former, avec cette dernière, une surface inférieure du bloc d'empilement 4.

Tel qu'exposé plus haut, les branches de la deuxième partie 42 sont reliées à la première partie 41 et sont disposées de sorte que la première partie 41 est interposée entre lesdites branches et la portion principale 23 de la cellule électrochimique 2 considérée le long de la deuxième direction 200. Autrement dit, les branches s'étendent en saillie de la première partie 41.

Les branches du bloc d'empilement considéré peuvent présenter une forme et/ou une configuration similaire ou distincte l'une de l'autre. Dans l'exemple illustré, la première branche comprend un orifice 43 configuré pour recevoir un premier organe de liaison 6. La deuxième branche comprend le passage 5 configuré pour permettre la circulation du fluide FI1 ainsi qu'un orifice 43 configuré pour recevoir un deuxième organe de liaison 6. Un tel arrangement peut être inversé. De manière préférentielle, le module de batterie 1 comprend au moins deux organes de liaison 6 configurés pour coopérer avec au moins une même paire 3 de blocs d'empilement 4. Notamment, de tels organes de liaison 6 présentent un positionnement inférieur et un positionnement supérieur au sein d'une bloc d'empilement 4 afin de maintenir les blocs solidaires en permettant une compression homogène de l'au moins une portion extrêmale 24.

Selon une alternative, chaque bloc d'empilement peut comprendre une pluralité de passages 5 configurés pour permettre la circulation d'un fluide FI1 de manière à former un ou plusieurs circuit(s) de circulation d'un tel fluide FI1.

Le module de batterie 1 comprend en outre un boîtier 8 configuré pour loger l'au moins une paire 3 de blocs d'empilement 4 et l'au moins une cellule électrochimique 2. Le boîtier 8 peut par exemple comprendre une embase 81 et un couvercle 82, visibles aux figures 1 et 2. Par exemple, il peut être réalisé en acier et/ou en aluminium. Également, le module de batterie 1 peut comprendre un ou plusieurs organe(s) de compression 83 d'au moins les blocs d'empilement 4 de l'au moins une paire 3 le long d'au moins une direction, par exemple le long de la première direction 100. Un organe de compression 83 considéré peut être rapporté et disposé de manière à être interposé entre l'un des blocs d'empilement 4 de la paire 3 et une paroi du boîtier 8. Alternativement, un tel organe peut être relié à l'une des parois du boîtier 8. L'organe de compression 83 peut être tout moyen de compression 83 connu classiquement mis en œuvre dans les modules de batterie, par exemple une plaque, un organe de rappel et/ou ressort. Par exemple, le moyen de compression 83 peut être réalisé dans un matériau métallique.

De manière particulière, l'organe de compression 83 peut être conformé de manière à prévenir un contact avec l'au moins un connecteur 22 de l'au moins une cellule électrochimique 2 afin de prévenir un risque de court-circuit. En ce sens, selon un exemple non limitatif, une extrémité de l'organe de compression 83, le long de la deuxième direction 200, peut comprendre un enfoncement ou une découpe s'inscrivant dans la continuité de la zone de réception 7 de l'au moins un connecteur 22 formée par l'au moins une paire 3, de sorte que l'organe de compression 83 s'étend à distance non nulle dudit connecteur 22. Alternativement ou en combinaison, l'extrémité de l'organe de compression 83 peut présenter une forme similaire à celle du bloc d'empilement, notamment de manière à s'inscrire dans la continuité de celui-ci le long de la première direction 100.

Optionnellement, l'organe de compression 83 peut comprendre une conduite 84 configurée pour être fluidiquement reliée à l'au moins une paire 3 de blocs d'empilement 4, particulièrement aux passages 5 de ladite paire 3. Optionnellement, l'organe de compression 83 peut comprendre au moins un trou 85 configuré pour recevoir l'au moins un organe de liaison 6. Un tel trou peut être lisse ou au moins en partie taraudé. L'organe de compression 83 peut alors être maintenu solidaire de l'au moins une paire 3 de blocs d'empilement 4.

Le module de batterie 1 comprend, en outre, une entrée 86 de fluide FI1, permettant d'alimenter le module en fluide FI1, et une sortie 87 de fluide FI1, permettant l'évacuation dudit fluide FI1. L'entrée 86 et la sortie 87 sont fluidiquement reliées aux passages 5 de l'au moins une paire 3 de blocs d'empilement, par exemple par l'intermédiaire de la conduite 84 de l'organe de compression 83.

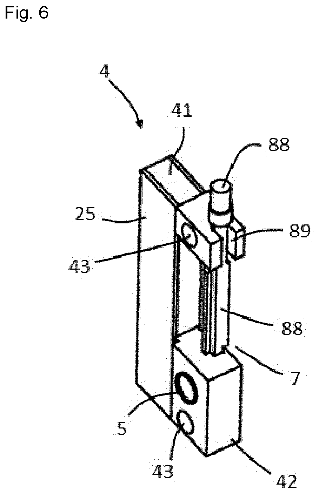

Le module de batterie 1 comprend également, de manière classique des éléments de raccordement 88 électrique, ou bornier positif et bornier négatif présentant respectivement une polarité positive et une polarité négative. Avantageusement, au moins l'un des blocs d'empilement 4 du module de batterie 1, par exemple de l'au moins une paire 3, est configuré pour recevoir au moins l'un des éléments de raccordement 88. En ce sens, l'un des blocs d'empilement 4 peut comprendre une encoche 89, telle qu'illustrée aux figures 6, 8 ou 12, configurée pour recevoir l'un des éléments de raccordement 88 et permettre son rattachement à au moins un connecteur 22, par exemple à l'au moins un connecteur 22, du module de batterie 1. Par exemple, l'encoche 89 peut être disposée dans la deuxième partie 42, notamment dans la branche supérieure. Afin de prévenir les courts-circuits, l'élément de raccordement 88 et ou ladite encoche 89 est équipé(s) d'un élément isolant 881 afin d'isoler électriquement l'élément de raccordement 88 et les blocs d'empilement 4.

L'au moins une cellule électrochimique 2 peut comprendre une pluralité de terminaux électriques et donc de connecteurs 22. Ceux-ci peuvent être arrangés selon différentes variantes mises en œuvre dans différents modes de réalisation du module de batterie 1, décrits ci-après.

Selon un premier mode de réalisation, illustré aux figures 2, 3, 7, 8, 11 et 13, l'au moins une cellule électrochimique 4 comprend une pluralité de connecteurs 22 électriques et une pluralité de portions extrêmales 24 portant chacune l'un desdits connecteurs 22. La portion principale 23 de l'au moins une cellule est interposée, le long d'une direction d'extension 600 de la cellule, entre lesdites portions extrêmales 24. Notamment la direction d'extension 600 est parallèle à la deuxième direction 200. La portion principale 23 est interposée entre un premier connecteur 22' électrique et une première portion extrêmale 24', portant celui-ci, d'une part et un deuxième connecteur 22" et une deuxième portion extrêmale 24", portant le deuxième connecteur 22", d'autre part.

Selon un tel mode de réalisation, le module comprend une pluralité de paires 3 de blocs d'empilement 4. Au moins une paire 3 de blocs d'empilement 4 d'un premier sous-ensemble A1 de blocs d'empilement 4 coopère avec la première portion extrêmale 24' et au moins une paire 3 de blocs d'empilement 4 d'un deuxième sous-ensemble A2 de blocs d'empilement 4 coopère avec la deuxième portion extrêmale 24". L'au moins une paire 3 du premier sous-ensemble A1 et l'au moins une paire 3 du deuxième sous-ensemble A2 présentent un positionnement, relativement à la portion extrêmale 24 qui leur est propre, similaire à ce qui a été exposé précédemment, la description ci-dessus s'appliquant *mutatis mutandis.* L'au moins une paire 3 du premier sous-ensemble A1 et l'au moins une paire 3 du deuxième sous-ensemble A2 s'étendent selon un sens opposé, relativement l'une à l'autre, le long de la direction d'extension 600 de la cellule, c'est-à-dire que pour le premier sous-ensemble A1 et le deuxième sous-ensemble A2, la première partie 41 des blocs d'empilement 4 est interposée entre la deuxième partie 42 dudit bloc et la portion principale 23 de la cellule électrochimique 2 le long de la direction d'extension 600. Autrement dit, dans chacun des sous-ensembles A1 et A2 considéré, la deuxième partie 42 des blocs d'empilement 4 est disposée à l'opposé de la portion principale 23 relativement à la première partie 41 du bloc d'empilement considéré le long de ladite direction.

L'ensemble des différentes variantes et alternatives susmentionnées relatives à l'au moins une paire 3 ou au module de batterie peut s'appliquer au premier sous-ensemble A1 et/ou au deuxième sous-ensemble A2. Également, l'ensemble des caractéristiques relatives à l'au moins une paire 3 de blocs d'empilement 4 s'étend à l'au moins une paire 3 du premier sous-ensemble A1 et à l'au moins une paire 3 du deuxième sous-ensemble A2. Notamment, tel qu'exposé plus haut, le module de batterie 1 peut comprendre au moins un organe de liaison 6 disposé au niveau du premier sous-ensemble A1 et au moins un organe de liaison 6 disposé au niveau du deuxième sous-ensemble A2. Il en va de même pour l'au moins un moyen d'étanchéité 51.

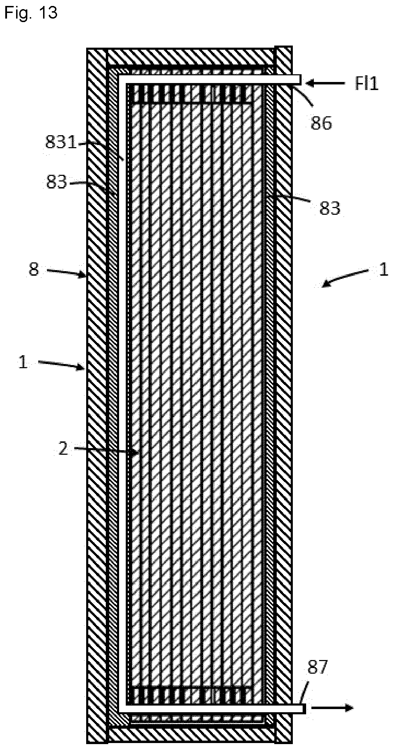

Dans un tel mode de réalisation, la circulation du fluide FI1 peut être organisée selon un système en « i », tel que représenté à la figure 3, c'est-à-dire un système dans lequel un fluide FI1 circule dans tout ou partie du premier sous-ensemble A1 et un fluide FI1 circule dans tout ou partie du deuxième sous-ensemble A2, parallèlement, par exemple indépendante, à une circulation réalisée dans le premier sous-ensemble au sein du boîtier 8 du module. Alternativement, la circulation du fluide FI1 peut être organisée selon un système dit en « U », tel qu'illustré à la figure 13, dans lequel le premier sous-ensemble A1 et le deuxième sous-ensemble A2 sont fluidiquement reliés l'un à l'autre. Le premier sous-ensemble A1 et le deuxième sous-ensemble A2 peuvent être reliés par une conduite 831 comprise dans le boîtier 8, par exemple dans l'un des organes de compression 83, ou, selon une alternative non représentée, par une conduite ou un circuit disposé à l'extérieur du boîtier 8.

Le raccordement électrique du module peut alors, selon un exemple de réalisation non représenté, être réalisé de manière telle que l'un des blocs de l'au moins une paire 3 de blocs d'empilement 4 du premier sous-ensemble A1 comprend une encoche 89, configurée pour permettre le rattachement au premier connecteur 22'. Similairement, l'un des blocs de l'au moins une paire 3 de blocs d'empilement 4 du deuxième sous-ensemble A2 comprend une encoche 89 configurée pour permettre le rattachement au deuxième connecteur 22".

Selon un deuxième mode de réalisation, non représenté, l'au moins une cellule électrochimique 2 comprend, comme précédemment, une pluralité de connecteurs 22 électriques. A la différence du premier mode de réalisation, l'au moins une cellule comprend une unique portion extrêmale 24 portant la pluralité de connecteurs 22.

Selon un tel mode de réalisation, l'au moins une paire 3 de blocs d'empilement 4 est conformée et dimensionnée de manière à recevoir la pluralité de connecteurs 22 sans que ceux-ci ne soient au contact l'un de l'autre. Particulièrement, la zone de réception 7 formée par les blocs de la paire 3, notamment leur première partie 41 et/ou leur deuxième partie 42, est adaptée pour recevoir la pluralité de connecteurs 22.

Similairement à ce qui a été exposé en référence au premier mode de réalisation, l'ensemble des différentes variantes et alternatives susmentionnées relative à l'au moins une paire 3 peut s'appliquer à l'au moins une paire 3 de blocs d'empilement 4.

De manière optionnelle mais préférentielle, dans un tel mode de réalisation, le module de batterie 1 peut, en outre, comprendre un organe de maintien 9 de l'au moins une cellule au sein du boîtier 8, un tel organe de maintien 9 étant configuré pour coopérer avec une zone de l'au moins une cellule opposée à la portion extrêmale 24, notamment ici le long de la deuxième direction 200. A titre d'exemple non limitatif, un tel organe de maintien 9 peut être un système de tirant(s) et/ou d'agrafe(s) et/ou un collage. Par exemple une telle zone peut être comprise dans la portion principale 23 ou sur le feuillard 21 de l'au moins une cellule.

Dans un tel mode de réalisation, la circulation du fluide FI1 peut être organisée selon un système en « i ». Le raccordement électrique du module peut être réalisé de manière telle que les blocs de l'au moins une paire 3 de blocs d'empilement 4 comprennent chacun une encoche 89, configurée pour permettre le rattachement à l'un des connecteurs 22.

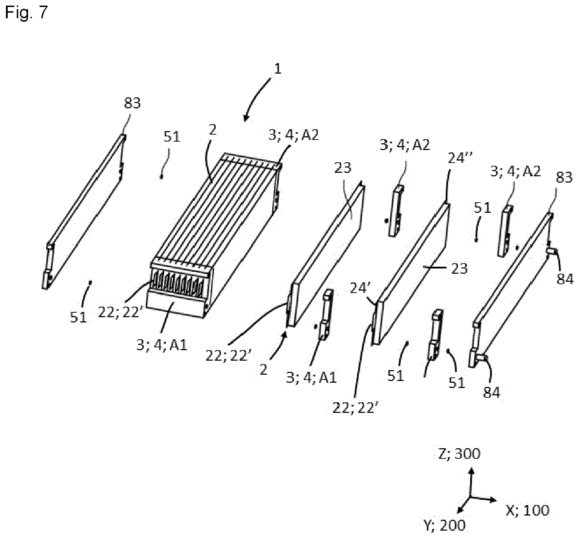

De manière particulière, tel qu'illustré aux figures 7 à 13, le module de batterie 1 peut également comprendre une pluralité de cellules électrochimiques 2 empilées le long d'une direction définie par un axe d'empilement 700, par exemple parallèle à la première direction 100, et une pluralité de paires 3 de blocs d'empilement 4 chacune configurée pour coopérer avec au moins l'une desdites cellules. Un tel empilement de cellules peut s'appliquer au premier mode de réalisation ou au deuxième mode de réalisation tels qu'exposés précédemment. La description ci-après est faite en référence au premier mode de réalisation, il est néanmoins entendu qu'un tel principe s'applique *mutatis mutandis* au deuxième mode de réalisation.

Également, la description précédente, relative à l'au moins une cellule électrochimique 2, s'étend aux différentes cellules de la pluralité, c'est-à-dire que lesdites cellules sont des cellules de type « pouch », prismatiques. En outre, les différentes cellules électrochimiques 2 présentent, de manière préférentielle, des dimensions et une forme similaires.

Il en va de même pour les différentes paires 3 de blocs d'empilement 4, la description précédente s'étendant *mutatis mutandis* aux différentes paires 3. De manière préférentielle, les blocs d'empilement 4 de l'ensemble de la pluralité de paires 3 présentent une forme et/ou des dimensions similaires.

En particulier, dans le cas du premier mode de réalisation, le premier sous-ensemble A1 comprend une pluralité de paires 3 de blocs d'empilement 4, lesquelles présentent préférentiellement une forme et des dimensions similaires. Également, le deuxième sous-ensemble A2 comprend une pluralité de paires 3 de blocs d'empilement 4, lesquelles peuvent présenter une forme et des dimensions similaires. Selon un exemple particulier de réalisation, le premier sous-ensemble A1 et le deuxième sous-ensemble A2 comprennent des blocs d'empilement 4 de forme et de dimensions similaires, de sorte à réduire le nombre de références nécessaire à la fabrication du module de batterie 1, et, par extension, son coût.

Les paires 3 de blocs d'empilement 4 du premier sous-ensemble A1 sont au moins en partie alignées de sorte qu'au moins une partie des blocs d'empilement 4 de la pluralité de paires 3 sont fluidiquement reliés entre eux. Particulièrement, les paires 3 de blocs d'empilement 4 s'étendent dans la continuité les unes des autres de manière à s'inscrire dans une même forme, par exemple une forme en « C » tel qu'illustré. Il en va de même pour les paires 3 de blocs d'empilement 4 comprises dans le deuxième sous-ensemble A2, s'étendant à l'opposé de chacune des cellules électrochimiques 2 relativement aux paires 3 de blocs d'empilement 4 du premier sous-ensemble A1.

Avantageusement, le module de batterie 1 est configuré afin que, au sein du premier sous-ensemble A1 et/ou au sein du deuxième sous-ensemble A2, au moins deux cellules électrochimiques 2 adjacentes de la pluralité de cellules coopèrent avec deux paires 3 de blocs d'empilement 4 adjacentes dans lesquelles l'un des blocs d'empilement 4 est commun auxdites deux paires 3. La description ci-après est faite en référence à des paires 3 comprises dans le premier sous-ensemble A1, elle s'étend néanmoins *mutatis mutandis* au deuxième sous-ensemble A2. Le bloc d'empilement commun s'étend au contact d'un côté d'une portion extrêmale 24 propre à chacune des deux cellules électrochimiques 2 adjacentes le long de l'axe d'empilement 700, c'est-à-dire ici le long de la première direction 100. Autrement dit, la première face de la deuxième partie 42 du bloc d'empilement commun est au contact de l'au moins une portion extrêmale de l'une des cellules adjacentes tandis que la deuxième face de la deuxième partie 42 du bloc d'empilement commun est au contact de l'autre desdites cellules. En ce sens, il comprend préférentiellement deux renfoncements tels que décrit plus haut.

Un tel arrangement peut être répété à l'échelle de tout ou partie du module de batterie 1 de sorte à présenter, le long de l'axe d'empilement 700, une alternance d'une portion extrêmale 24 et d'un bloc d'empilement. Dans l'exemple illustré, le module présente, au sein du premier sous-ensemble A1, une alternance d'un bloc d'empilement 4 et d'une première portion extrêmale 24' et, au sein du deuxième sous-ensemble A2, une alternance d'un bloc d'empilement 4 avec une deuxième portion extrêmale 24" le long de la direction d'empilement. Des cellules électrochimiques adjacentes peuvent, de manière particulière, être au contact l'une de l'autre au niveau de leur portion principale 23.

Similairement à ce qui a été précédemment exposé, le module de batterie 1 peut comprendre au moins un organe de liaison 6 disposé au niveau du premier sous-ensemble A1 de sorte à maintenir tout ou partie des paires 3 de blocs d'empilement 4 dudit sous-ensemble solidaires le long d'au moins une direction. De même, le module de batterie 1 peut comprendre au moins un organe de liaison 6 disposé au niveau du deuxième sous-ensemble A2 de manière à maintenir solidaire tout ou partie des paires 3 de blocs d'empilement 4 dudit sous-ensemble. Il en va de même pour l'au moins un moyen d'étanchéité 51, un ou plusieurs moyen(s) d'étanchéité pouvant être disposé à l'interface entre les différents blocs d'empilement 4 du premier sous-ensemble A1 d'une part et du deuxième sous-ensemble A2 d'autre part.

De manière préférentielle, les blocs d'empilement 4 d'une même paire 3 sont rapportés et amovibles de sorte à être distincts l'un de l'autre et ainsi faciliter l'assemblage du module de batterie 1. Selon une alternative non représentée, tel qu'exposé plus haut, les blocs d'empilement 4 d'au moins une même paire 3 peuvent former un ensemble monobloc. Selon un exemple particulier de réalisation, les blocs d'empilement 4 d'une pluralité de paires 3 destinées à être intégrées dans un même sous-ensemble peuvent former un ensemble monobloc, par exemple de manière à former une structure en « peigne » apte à coopérer avec une pluralité de portions extrêmales propres à des cellules électrochimiques distinctes adjacentes.

La circulation du fluide FI1 peut être organisée selon un système en « i » ou selon un système en « U ». Tout ou partie des paires 3 du premier sous-ensemble A1 sont configurées de sorte à être fluidiquement reliées entre elles. Il en va de même pour les paires 3 du deuxième sous-ensemble A2. Particulièrement, tout ou partie des paires 3 propres au premier sous-ensemble A1 et au deuxième sous-ensemble A2 peuvent être fluidiquement reliées.

Le raccordement électrique du module de batterie 1 peut être réalisé au niveau de blocs d'empilement 4 distincts. Par exemple de tels blocs peuvent être compris dans le même sous-ensemble. En l'espèce, le raccordement électrique est réalisé au niveau de blocs d'empilement 4 compris dans le premier sous-ensemble A1. Le raccordement électrique peut être réalisé au niveau de blocs d'empilement 4 présentant un positionnement extrêmal opposé le long de l'axe d'empilement 700, c'est-à-dire au niveau de deux blocs étant disposés à l'extrême opposé de l'empilement de cellules et de paires 3 de blocs d'empilement 4. Les blocs d'empilement 4 configurés pour permettre le raccordement électrique du module de batterie 1 comprennent chacun une encoche 89.

L'invention s'étend également à un bloc d'empilement destiné à un module de batterie 1. Les différentes caractéristiques exposées précédemment en référence aux blocs d'empilement 4 de l'au moins une paire 3 s'étendent à un tel bloc d'empilement.

L'invention s'étend enfin à un procédé d'assemblage d'un module de batterie 1 selon l'invention. De manière générale, un tel procédé comprend une étape de positionnement de l'un des blocs d'empilement 4 de l'au moins une paire 3 de blocs d'empilement 4 de chaque côté de l'au moins une portion extrêmale 24 de la cellule électrochimique 2 considérée. Les blocs de l'au moins une paire 3 sont ainsi disposés de sorte qu'ils s'étendent chacun au contact d'un côté de celle-ci. La première partie 41 desdits blocs d'empilement 4 s'étend à distance non nulle de la portion principale 23 de l'au moins une cellule électrochimique 2, et les deuxièmes parties 42 s'étendent en regard l'une de l'autre le long d'au moins une direction, en l'espèce le long de la première direction 100. Notamment, les deuxièmes parties 42 peuvent s'étendre au contact l'une de l'autre afin de limiter l'encombrement généré.

Optionnellement, le procédé peut comprendre, préalablement à l'étape de positionnement, une étape d'application d'une pâte thermique 25 sur tout ou partie de la première partie 41 des blocs d'empilement 4.

Optionnellement, le procédé peut comprendre, préalablement à l'étape de positionnement, une étape d'intégration d'au moins un moyen d'étanchéité 51 à l'un et/ou l'autre des blocs d'empilement 4 de l'au moins une paire 3.

Une étape d'alignement desdits blocs d'empilement 4 est ensuite exécutée de sorte à disposer les passages 5 des blocs d'empilement 4 pour qu'ils soient fluidiquement reliés lorsqu'un fluide FI1 circule dans le module de batterie 1.

Les étapes s'appliquent *mutatis mutandis* pour le premier sous-ensemble A1 et le deuxième sous-ensemble A2 lorsque le module de batterie 1 est réalisé selon le premier mode de réalisation.

Lorsque le module de batterie 1 comprend une pluralité de cellules électrochimiques 2 empilées le long de la direction d'empilement, tel que décrit plus haut, les étapes précédentes peuvent être répétées de sorte à positionner puis aligner une pluralité de cellules électrochimiques 2 et de paires 3 de blocs d'empilement 4 de manière à former un empilement s'étendant le long de l'axe d'empilement 700.

Le procédé peut ensuite comprendre une étape de solidarisation des blocs d'empilement 4 de l'au moins une paire 3 entre eux par l'intermédiaire d'au moins un organe de liaison 6. Les blocs d'empilement 4 sont alors maintenus solidaires de manière à comprimer l'au moins une portion extrêmale 24 de l'au moins une cellule électrochimique 2. Lorsque le module de batterie 1 comprend une pluralité de cellules et de paires 3 empilées le long de la direction d'empilement, une pluralité de paires 3 de blocs d'empilement 4 peuvent être maintenues solidaires les unes des autres.

Le procédé peut comprendre une étape de positionnement d'au moins un organe de compression 83, par exemple une plaque, au contact d'au moins l'un des blocs de l'au moins une paire 3. Selon une option d'exécution, une telle étape peut être exécutée préalablement à l'étape de solidarisation des blocs d'empilement 4 et l'étape de solidarisation peut être exécutée de sorte à maintenir l'au moins un organe de compression 83 solidaire de l'au moins une paire 3. Alternativement, l'au moins un organe de compression 83 peut être disposé au contact d'au moins l'un des blocs ultérieurement à l'étape de solidarisation.

Le procédé peut ensuite comprendre une étape de raccordement électrique du module de batterie 1. Une telle étape peut comprendre une sous-étape de positionnement d'au moins un élément de raccordement 88 au niveau de l'un des blocs d'empilement 4, par exemple un bloc d'empilement comprenant une encoche 89 telle qu'exposée plus haut, de sorte à venir au contact d'au moins un connecteur 22. Lorsque le module de batterie 1 comprend une pluralité de cellules électrochimiques 2, l'étape de raccordement électrique peut comprendre une sous-étape de positionnement de barres d'interconnexion 891 de sorte à relier électriquement les connecteurs 22 de cellules électrochimiques 2 distinctes en série ou en parallèle. Les blocs d'empilement 4 selon l'invention sont avantageusement conformés et dimensionnés de manière à ce que les zones de réceptions 7 propres à différentes paires 3, alignées, permettent le passage 5 de telles barres d'interconnexion 891. Les blocs d'empilement 4 selon l'invention sont avantageusement conformés et dimensionnés de manière à ce que les barres d'interconnexion 891 ne génèrent pas d'encombrement supplémentaire relativement aux blocs d'empilement 4, notamment le long de la première direction 100. Les barres d'interconnexion 891 ainsi positionnées s'étendent à distance non nulle de la première partie 41 et de la deuxième partie 42 des différents blocs d'empilement 4.

Le procédé comprend ensuite une étape de positionnement de l'ensemble formé par la ou les cellule(s) électrochimique(s) et la ou les paire(s) 3 de blocs d'empilement 4 dans le boîtier 8. Optionnellement, un tel ensemble peut également comprendre l'au moins un organe de compression 83.

Le procédé comprend enfin une étape de fermeture du boîtier 8 et une étape de raccordement du module de batterie 1 à un circuit de fluide FI1, notamment un circuit de fluide FI1 de refroidissement.

La présente invention propose ainsi un bloc d'empilement pour module de batterie et un module de batterie comprenant un tel bloc, notamment destiné à un véhicule automobile, permettant avantageusement la simplification du module de batterie en réduisant le nombre de références nécessaires, et permettant également, par voie de conséquence, la réduction de la masse et du coût du module. Les blocs d'empilement permettent avantageusement le traitement thermique, par exemple le refroidissement, des cellules ainsi que leur maintien tout en limitant l'encombrement généré et le nombre de pièces nécessaires. Elle assure également la durabilité du module de batterie en traitant thermiquement les zones classiquement les plus impactés par l'important échauffement prenant place au sein des cellules électrochimiques. L'assemblage et le désassemblage du module est également simplifié, l'ajustement du nombre de cellules électrochimiques pouvant être fait par simple ajout ou retrait du nombre de blocs d'empilement nécessaire.

La présente invention ne saurait toutefois se limiter aux moyens et configurations décrits et illustrés ici et elle s'étend également à tout moyen ou configuration équivalents et à toute combinaison techniquement opérante de tels moyens dans la mesure où ils remplissent *in fine* les fonctionnalités décrites et illustrées dans le présent document.

## Revendications

1. Module de batterie (1) comprenant au moins une cellule électrochimique (2) souple prismatique et au moins une paire (3) de blocs d'empilement (4), l'au moins une cellule (2) comprenant une portion principale (23), à l'intérieur de laquelle s'étend une pluralité d'électrodes, et au moins une portion extrêmale (24), notamment une terrasse, prolongeant la portion principale (23) et portant au moins un connecteur (22) électrique relié aux électrodes, **caractérisé en ce que**
- les blocs d'empilement (4) de l'au moins une paire (3) comprennent chacun une première partie (41) et une deuxième partie (42) disposées à distance non nulle de l'au moins un connecteur (22) et de la portion principale (23) de la cellule (2), les premières parties (41) desdits blocs s'étendant chacune au contact de l'un des deux côtés opposés de l'au moins une portion extrêmale (24) de la cellule (2), de sorte que ladite portion extrêmale (24) est interposée entre les blocs d'empilement (4) de la paire (3) ;
- les deuxièmes parties (42) des blocs d'empilement (4) de ladite paire (3) s'étendent en saillie de la première partie (41), en regard l'une de l'autre, et comprennent chacune au moins un passage (5) configuré pour permettre la circulation d'un fluide (FL1), notamment d'un fluide de refroidissement, de sorte qu'au moins les blocs d'empilement (4) de la paire (3) sont fluidiquement reliés l'un à l'autre.

2. Module de batterie (1) selon la revendication précédente, dans lequel la première partie (41) des blocs d'empilement (4) est au moins partiellement recouverte d'une pâte thermique (25).

3. Module de batterie (1) selon l'une des revendications précédentes, dans lequel la première partie (41) présente une première épaisseur (410), le long d'une première direction (100) orthogonale à l'au moins une portion extrêmale (24), strictement inférieure à une deuxième épaisseur (420) de la deuxième partie (42) le long de cette même direction, notamment de sorte que la différence entre la première épaisseur (410) et la deuxième épaisseur (420) est supérieure ou égale à la moitié d'une épaisseur de la portion extrêmale (24) de la cellule électrochimique (2).

4. Module de batterie (1) selon l'une des revendications précédentes comprenant en outre au moins un organe de liaison (6) des blocs d'empilement (4) de l'au moins une paire (3) configuré pour maintenir lesdits blocs (4) solidaires l'un de l'autre, la deuxième partie (42) étant configurée pour accueillir l'au moins un organe de liaison (6).

5. Module de batterie selon l'une des revendications précédentes, comprenant, en outre au moins un moyen d'étanchéité (51) disposé au niveau du passage (5) de l'un et/ou de l'autre des blocs d'empilement (4) de la paire (3).

6. Module de batterie selon l'une des revendications précédentes, comprenant une pluralité de cellules électrochimiques (2) empilées le long d'une direction définie par un axe d'empilement (700) et une pluralité de paires (3) de blocs d'empilement (4) chacune configurée pour coopérer avec au moins l'une desdites cellules, tout ou partie des blocs d'empilement (4) de la pluralité de paires (3) étant fluidiquement reliés entre eux, au moins deux cellules électrochimiques (2) adjacentes de la pluralité de cellules coopérant avec deux paires (3) de blocs d'empilement (4) adjacentes dans lesquelles l'un des blocs d'empilement (4) est commun auxdites deux paires (3) de sorte que ledit bloc d'empilement commun est au contact d'un côté d'une portion extrêmale (24) propre à chacune des deux cellules électrochimiques (2) adjacentes le long de l'axe d'empilement (700).

7. Module de batterie selon l'une des revendications précédentes, comprenant une pluralité de connecteurs (22) électriques et une pluralité de portions extrêmales, portant chacune l'un desdits connecteurs (22), la portion principale (23) étant interposée, le long d'une direction d'extension (600) de la cellule, entre un premier connecteur (22') électrique et une première portion extrêmale (24') d'une part et un deuxième connecteur (22") et une deuxième portion extrêmale (24") d'autre part, le module comprenant, en outre, une pluralité de paires (3) de blocs d'empilement (4), au moins une paire (3) de blocs d'empilement (4) d'un premier sous-ensemble (A1) de blocs d'empilement (4) coopérant avec la première portion extrêmale (24') et au moins une paire (3) de blocs d'empilement (4) d'un deuxième sous-ensemble (A2) de blocs d'empilement (4) coopérant avec la deuxième portion extrêmale (24").

8. Module de batterie (1) selon l'une des revendications précédentes, comprenant un boîtier (8) configuré pour loger l'au moins une paire (3) de blocs d'empilement (4) et l'au moins une cellule électrochimique (2) et/ou comprenant un ou plusieurs organe(s) de compression (83) d'au moins les blocs d'empilement (4) de l'au moins une paire (3) le long d'au moins une direction.

9. Bloc d'empilement (4) pour un module de batterie (1) selon l'une des revendications précédentes, comprenant une première partie (41) configurée pour s'étendre au contact d'une portion extrêmale (24) d'une cellule électrochimique (2), ladite portion extrêmale (24) portant un connecteur (22) et étant dépourvue d'électrodes, et une deuxième partie (42) comprenant au moins un passage (5) configuré pour permettre la circulation d'un fluide (FI1), notamment d'un fluide (FI1) de refroidissement, la première partie (41) et/ou la deuxième partie (42) des blocs d'empilement (4) de ladite paire (3) délimitant au moins une zone de réception (7) configurée pour recevoir au moins un connecteur (22) de la cellule électrochimique (2) de sorte que celui-ci s'étende à distance non nulle de la première partie (41) et de la deuxième partie (42).

10. Véhicule automobile à motorisation électrique ou hybride comprenant un module de batterie (1) selon l'une des revendications 1 à 8 et/ou au moins un bloc d'empilement selon la revendication 9.

11. Procédé d'assemblage d'un module de batterie (1) selon l'une des revendications 1 à 8 comprenant :
- une étape de positionnement de l'un des bloc d'empilement de l'au moins une paire (3) de blocs d'empilement (4) de chaque côté de l'au moins une portion extrêmale (24) de la cellule électrochimique (2) considérée de sorte qu'ils s'étendent chacun au contact d'un côté de celle-ci, la première partie (41) desdits blocs d'empilement (4) s'étendant à distance non nulle de la portion principale (23) de l'au moins une cellule électrochimique (2), et les deuxièmes parties (42) propre à chacun desdits blocs d'empilement (4) s'étendant en regard l'une de l'autre le long d'au moins une direction ;
- une étape d'alignement desdits blocs d'empilement (4) de sorte que leurs passages (5) sont fluidiquement reliés ;
- une étape de solidarisation des blocs d'empilement (4) de l'au moins une paire (3) entre eux.
